# FASCICULE DE BREVET EUROPEEN

(11) **EP 0 607 719 B1**
(45) Date de publication et mention de la délivrance du brevet: **09.05.2001**
(21) Numéro de dépôt: 93403068.5
(22) Date de dépôt: 17.12.1993
(51) Int. Cl.: F16C 19/52, G01P 3/44

(54) **Dispositif de montage à joint d'étanchéité à codeur incorporé**
Vorrichtung zur Montage einer Dichtung mit integriertem Codierer
Mounting device for a seal with integrated encoder

(30) Priorité: 19.01.1993 FR 9300458
(43) Date de publication de la demande: 27.07.1994
(60) Demande divisionnaire: 98402513.0
(73) Titulaire: SNR ROULEMENTS, 74010 Annecy Cédex (FR)
(72) Inventeur: Hajzler, Christian, F-74000 Annecy (FR)
(74) Mandataire: Derambure, Christian

(56) Documents cités:
- EP-A- 0 371 836
- EP-A- 0 378 939
- EP-A- 0 495 323
- DE-A- 3 735 070
- DE-A- 3 809 904
- FR-A- 2 574 501

## Description

L'invention concerne un ensemble préassemblé formant joint d'étanchéité à codeur incorporé dans lequel un disque tournant porte ledit codeur à aimantation multipolaire pour générer un champ magnétique apte à se déplacer devant un capteur fixe.

La publication EP-A-495323 décrit un joint d'étanchéité qui possède un déflecteur tournant recouvert ou réalisé en un matériau aimanté.

Lorsque le fonctionnement du capteur nécessite un champ magnétique important, l'encombrement axial du codeur doit être augmenté. Selon la publication FR-A-2 660 975 la face intérieure du disque tournant est orientée vers la garniture d'étanchéité, tandis que la face extérieure du disque porte le codeur. La dimension axiale globale d'un tel joint ne permet plus la réalisation de roulements ou de paliers étanches dont l'encombrement axial est déterminé à l'avance.

La figure 4 du document EP-A-495 323, montre un ensemble formant joint d'étanchéité du genre énoncé dans le préambule de la revendication 1. En effet, elle représente un roulement à capteur d'informations ayant une bague fixe et une bague tournante. Sur la bague fixe est montée une armature fixe et sur la bague mobile est montée une armature mobile. Les deux armatures délimitent axialement entre elles une chambre annulaire. L'armature mobile comporte un disque et, solidaire, une portée cylindrique destinée à être emmanchée sur la bague tournante. Dans cette réalisation, le capteur d'informations est solidaire au roulement.

Le document FR-A-2574501 concerne également un roulement à capteur d'informations intégré. Il est prévu, s'agissant du codeur, qu'il peut être formé à partir d'une feuille d'acier à faible teneur en carbone ferro-magnétique revêtue d'une couche mince de ferrite et de liant polymérisé.

L'invention a pour objet un roulement et un palier étanche dans lequel la position axiale du joint d'étanchéité demeure sans effet sur la dimension globale dudit roulement ou palier.

L'invention a également pour objet un roulement et un palier dont l'étanchéité est améliorée au niveau dés liaisons du joint avec les éléments fixe et mobile dudit roulement ou palier.

L'invention a encore pour objet un ensemble préassemblé formant joint d'étanchéité à codeur incorporé compact comportant une garniture d'étanchéité à lèvres souples, dont le codeur peut être aisément fabriqué à partir d'un élastomère chargé de particules de ferrite.

Selon l'invention , il est proposé un ensemble préassemblé formant joint d'étanchéité à codeur incorporé :
- destiné à être monté entre un support fixe et un support tournant, faisant partie d'un roulement ou d'un palier ;
- cet ensemble comportant une armature fixe et une armature mobile délimitant axialement entre elles une chambre annulaire ;
- l'armature fixe étant destinée à être solidarisée au support fixe ;
- l'armature mobile comportant un disque et, solidaire, une portée cylindrique destinée à être emmanchée sur le support tournant ;
- le disque supportant un élément codeur magnétique,
caractérisé par le fait que :
- le disque comprend une première et une seconde paroi décalée axialement vers l'extérieur par rapport à la première paroi, la seconde paroi étant adjacente à la portée cylindrique ;
- l'élément codeur magnétique est formé par un élastomère chargé de particules magnétiques recouvrant la face extérieure du disque ;
- l'élément codeur magnétique est raccordé à un moyen d'étanchéité fixé au disque destiné à être en appui sur le support tournant ;
- la face extérieure de l'élément codeur magnétique est sensiblement contenue dans le plan P d'une face latérale d'au moins un des dits supports.

Le dit ensemble préassemblé formant joint d'étanchéité à codeur incorporé est ainsi apte à être dépourvu de moyen permettant l'association d'un capteur devant lequel est apte à se déplacer le dit codeur à aimantation multipolaire générant un champ magnétique lu par le dit capteur.

L'ensemble préassemblé ainsi réalisé possède l'avantage de pouvoir être monté de façon étanche dans un roulement sans précautions particulières.

Le codeur incorporé au joint possèdera cependant un volume suffisant pour que le champ magnétique puisse être aisément lu par un capteur.

D'autres caractéristiques et avantage de l'invention apparaîtront à la lecture de la description d'exemples de réalisations des ensembles joint/codeur en référence au dessin annexé dans lequel :
- la figure 1 est une vue en coupe radiale d'un ensemble préassemblé formant joint d'étanchéité à codeur incorporé monté entre un arbre tournant et un carter fixe ;
- la figure 2 représente une variante de réalisation de l'ensemble représenté à la figure 1.

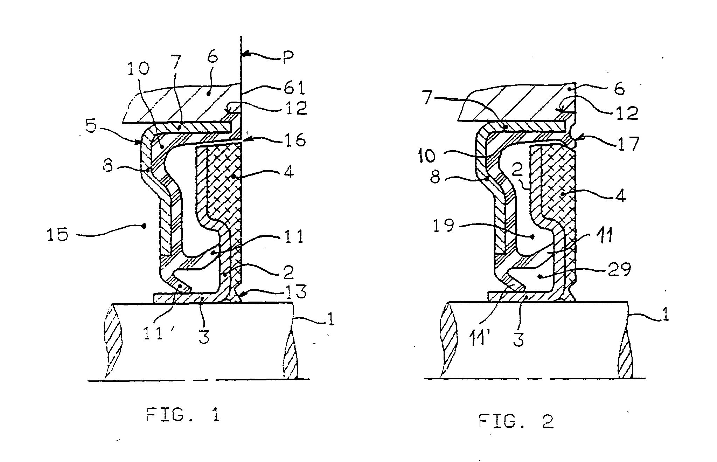

Ainsi que cela est montré à la figure 1 et 2 un arbre support tournant 1 porte un disque radial 2 solidaire d'une portée cylindrique 3 emmanchée sur l'arbre 1. Une face du disque 2 est recouverte par un élastomère chargé de particules magnétiques qui constitue l'élément codeur 4.

Le disque 2 et sa portée cylindrique 3 constituent conjointement une armature intérieure localisée dans une armature extérieure fixe 5 montée sur un support 6. L'armature extérieure fixe 5 possède également une portée de montage 7 encastrée dans le support 6 et un disque radial fixe 8 orienté vers l'axe de rotation de l'arbre 1.

Le disque 8 porte un revêtement élastomère 10 d'étanchéité surmoulé qui possède ici une lèvre axiale 11 et une lèvre radiale 11' respectivement en appui sur la face libre du disque 2 et sur la surface extérieure de la portée 3. La limite du revêtement 10 raccordée à la porte de montage 7 possède une nervure circulaire 12 encastrée dans un lamage ou sur un chanfrein du support 6.

Selon l'invention, l'élément codeur 4 est raccordé à une lèvre radiale d'étanchéité 13 fixée au disque 2 et en appui sur l'arbre 1, la surface latérale extérieure de l'élément codeur 4 étant sensiblement confondue avec le plan p de la face latérale 61 du support 6.

L'ensemble des disques 2, 8 munis de leurs revêtements 4, 10 est monté dans une cavité annulaire 15 axialement limitée par le plan p.

Selon une caractéristique du montage représenté à la figure 1, la surface périphérique de l'ensemble constitué par le disque 2 et par l'élément codeur 4 est radialement séparée du revêtement élastomère 10 par un interstice 16.

Par ailleurs, la surface périphérique de l'ensemble disque 2-codeur 4 peut être encastrée sous une lèvre d'étanchéité 17 fixe portée par le revêtement 10 et au contact de l'élément codeur tournant 4 ainsi que cela est représenté à la figure 2.

Par ailleurs, les disques 2, 8 délimitent des cavités annulaires 19, 29 remplies d'un liquide magnétique maintenu en place par le magnétisme de l'élément codeur 4. Ce liquide peut également être contenu dans l'interstice 16. La présence de ferrite améliore de la sorte l'étanchéité du joint.

Le disque 2 peut également être réalisé en matériau magnétique dans le but d'assurer une concentration du champ et du flux magnétique émis par l'élément codeur 4.

## Revendications

1. Ensemble préassemblé formant joint d'étanchéité à codeur incorporé :
- destiné à être monté entre un support fixe (6) et un support tournant (1), faisant partie d'un roulement ou d'un palier ;
- cet ensemble comportant une armature fixe (5) et une armature mobile (2, 3) délimitant axialement entre elles une chambre annulaire (19) ;
- l'armature fixe (5) étant destinée à être solidarisée au support fixe (6) ;
- l'armature mobile comportant un disque (2) et, solidaire, une portée cylindrique (3) destinée à être emmanchée sur le support tournant (1) ;
- le disque (2) supportant un élément codeur magnétique (4),
caractérisé par le fait que :
- le disque (2) comprend une première et une seconde paroi décalée axialement vers l'extérieur par rapport à la première paroi, la seconde paroi étant adjacente à la portée cylindrique (3) ;
- l'élément codeur magnétique est formé par un élastomère chargé de particules magnétiques recouvrant la face extérieure du disque (2) ;
- l'élément codeur magnétique (4) est raccordé à un moyen d'étanchéité (13) fixé au disque (2) destiné à être en appui sur le support tournant (1) ;
- la face extérieure de l'élément codeur magnétique (4) est sensiblement contenue dans le plan P d'une face latérale d'au moins un des dits supports (1, 6).

2. Ensemble selon la revendication 1, caractérisé par le fait que la surface périphérique de l'ensemble disque (2)-codeur (4) est limitée radialement par un interstice (16).

3. Ensemble selon l'une quelconque des revendications 1 ou 2, caractérisé par le fait que la surface périphérique de l'ensemble disque (2) - codeur (4) est encastrée sous une lèvre d'étanchéité (17), au contact du codeur (4) tournant.

4. Ensemble selon l'une quelconque des revendications 1 à 3, caractérisé par le fait que l'armature fixe (5) comporte un disque (8) et une portée de montage (7) destinée à être encastrée dans le support fixe (6).

5. Ensemble selon l'une quelconque des revendications 1 à 4, caractérisé par le fait que le disque fixe (8) de l'armature fixe (5) porte un revêtement élastomère (10) d'étanchéité surmoulé, ce revêtement comportant une lèvre axiale (11) et une lèvre radiale (11'), respectivement en appui sur la face libre interne du disque (2) et sur la portée (3).

6. Ensemble selon les revendications 3, 4 et 5, caractérisé par le fait que la limite du revêtement élastomère (10) raccordée à la portée de montage (7) possède une nervure circulaire (12) raccordée à la portée de montage (7) encastrée dans un lamage ou sur un chanfrein du support fixe (6).

7. Ensemble selon l'une quelconque des revendications 1 à 6, caractérisé par le fait que le codeur (4) possède un volume suffisant pour que le champ magnétique qu'il engendre puisse être aisément lu par un capteur.

8. Ensemble selon l'une quelconque des revendications 1 à 7, caractérisé par le fait que la cavité annulaire (19) contient un liquide magnétique.

9. Ensemble selon la revendication 2 et 8, caractérisé par le fait que l'interstice (16) de limitation de la surface périphérique de l'ensemble disque (2) - codeur (4) contient un liquide magnétique.

10. Ensemble selon l'une quelconque des revendications 1 à 9, caractérisé par le fait que le disque (2) possède une extension radiale en matériau magnétique pour la concentration du flux magnétique délivré par le dit codeur (4).

11. Ensemble selon l'une quelconque des revendications 1 à 10, caractérisé par le fait que les particules magnétiques présentes dans l'élastomère formant le codeur (4) sont en ferrite.

12. Roulement ou palier étanche comportant une bague ou support fixe (6) et une bague ou support tournant ( 1) et, monté sur eux, un ensemble préassemblé formant joint d'étanchéité à codeur incorporé, selon l'une quelconque des revendications 1 à 11.

## Patentansprüche

1. Vormontierte, eine Dichtung mit eingebautem Codierwerk bildende Baugruppe :
- die zwischen einem festen Träger (6) und einem drehbaren Träger (1), Bestandteile eines Wälzlagers oder eines Lagers, montiert werden soll;
- wobei diese Baugruppe eine feste Armatur (5) und eine mobile Armatur (2, 3) umfasst, die axial untereinander eine ringförmige Kammer (19) abgrenzen;
- wobei die feste Armatur (5) mit dem festen Träger (6) verbunden werden soll;
- wobei die mobile Armatur eine Scheibe (2) und eine damit verbundene zylindrische Auflage (3) umfasst, die auf den drehbaren Träger (1) aufgesteckt werden soll;
- wobei die Scheibe (2) ein magnetisches Codierelement (4) trägt,
dadurch gekennzeichnet, dass:
- die Scheibe (2) eine erste und eine zweite Wand umfasst, die axial nach außen in Bezug auf die erste Wand versetzt ist, wobei die zweite Wand an die zylindrische Auflage (3) angrenzt;
- das magnetische Codierelement aus einem mit magnetischen Partikeln geladenen Elastomer besteht, das die Außenseite der Scheibe (2) überdeckt;
- das magnetische Codierelement (4) an ein an der Scheibe (2) befestigtes Dichtungsmittel (13) angeschlossen ist, um sich auf dem drehbaren Träger (1) abzustützen;
- die Außenseite des magnetischen Codierelements (4) ungefähr nach der Ebene P einer Seitenfläche mindestens einer der besagten Träger (1, 6) verläuft.

2. Baugruppe nach Anspruch 1, dadurch gekennzeichnet, dass die Umfangsfläche der Baugruppe Scheibe (2) und Codierwerk (4) in radialer Richtung von einem Spalt (16) begrenzt wird.

3. Baugruppe nach einem der Ansprüche 1 oder 2, dadurch gekennzeichnet, dass die Umfangsfläche der Baugruppe Scheibe (2) und Codierwerk (4) unter einer mit dem drehbaren Codierwerk (4) in Kontakt stehenden Dichtungslippe (17) eingebaut ist.

4. Baugruppe nach einem der Ansprüche 1 bis 3, dadurch gekennzeichnet, dass die feste Armatur (5) eine Scheibe (8) und eine Montageauflage (7) umfasst, die in den festen Träger (6) eingebaut werden soll.

5. Baugruppe nach einem der Ansprüche 1 bis 4, dadurch gekennzeichnet, dass die feste Scheibe (8) der festen Armatur (5) eine angeformte Dichtheits-Elastomer-Beschichtung (10) aufweist, wobei diese Beschichtung eine axiale Lippe (11) und eine radiale Lippe (11') umfasst, die sich jeweils auf der freien Innenseite der Scheibe (2) und auf der Auflage (3) abstützen.

6. Baugruppe nach den Ansprüchen 3, 4 und 5, dadurch gekennzeichnet, dass die Grenze der an der Montageauflage (7) angeschlossenen Elastomer-Beschichtung (10) eine an die Montageauflage (7) angeschlossene, kreisförmige Rippe (12) besitzt, die in eine Senkung oder an einer Fase des festen Trägers (6) eingelassen ist.

7. Baugruppe nach einem der Ansprüche 1 bis 6, dadurch gekennzeichnet, dass das Codierwerk (4) ein ausreichendes Volumen besitzt, so dass das von ihm erzeugte Magnetfeld leicht von einer Sonde gelesen werden kann.

8. Baugruppe nach einem der Ansprüche 1 bis 7, dadurch gekennzeichnet, dass die ringförmige Kammer (19) eine magnetische Flüssigkeit enthält.

9. Baugruppe nach Anspruch 2 und 8, dadurch gekennzeichnet, dass der Spalt (16), der die Umfangsfläche von der Baugruppe Scheibe (2) und Codierwerk (4) abgrenzt, eine magnetische Flüssigkeit enthält.

10. Baugruppe nach einem der Ansprüche 1 bis 9, dadurch gekennzeichnet, dass die Scheibe (2) eine radiale Verlängerung aus magnetischem Material besitzt, um den vom besagten Codierwerk (4) gelieferten Magnetfluss zu konzentrieren.

11. Baugruppe nach einem der Ansprüche 1 bis 10, dadurch gekennzeichnet, dass die im das Codierwerk (4) bildenden Elastomer vorhandenen Magnetpartikel aus Ferrit sind.

12. Wälzlager oder dichtes Lager mit einem Ring oder einem festen Träger (6) und. einem Ring oder einem drehbaren Träger (1) sowie, auf ihnen montiert, einer vormontierten, eine Dichtung mit eingebautem Codierwerk bildenden Baugruppe nach einem der Ansprüche 1 bis 11.

## Claims

1. A preassembled assembly forming a sealing joint with incorporated coder:
- intended to be mounted between a fixed support (6) and a rotating support (1), forming part of a bearing or roller bearing;
- this assembly having a fixed frame (5) and a moving frame (2, 3) axially delimiting between them an annular chamber (19);
- the fixed frame (5) being intended to be fixed to the fixed support (6);
- the moving frame having a disc (2) and, fixed to it, a cylindrical surface (3) intended to be fitted on the rotating support (1);
- the disc (2) supporting a magnetic coding element (4),
characterised by the fact that:
- the disc (2) comprises a first wall and a second wall offset axially towards the outside with respect to the first wall, the second wall being adjacent to the cylindrical surface (3);
- the magnetic coding element is formed by an elastomer loaded with magnetic particles covering the external face of the disc (2);
- the magnetic coding element (4) is connected to a sealing means (13) fixed to the disc (2) intended to be in abutment on the rotating support (1);
- the external face of the magnetic coding element (4) is substantially contained in the plane P of a lateral face of at least one of the said supports (1, 6).

2. An assembly according to Claim 1, characterised by the fact that the peripheral surface of the assembly consisting of disc (2) and coder (4) is delimited radially by an interstice (16).

3. An assembly according to either one of Claims 1 or 2, characterised by the fact that the peripheral surface of the assembly consisting of disc (2) and coder (4) is recessed under a sealing lip (17), in contact with the rotating coder (4).

4. An assembly according to any one of Claims 1 to 3, characterised by the fact that the fixed frame (5) has a disc (8) and a mounting surface (7) intended to be recessed in the fixed support (6).

5. An assembly according to any one of Claims 1 to 4, characterised by the fact that the fixed disc (8) on the fixed frame (5) carries a moulded-on elastomer sealing cladding (10), this cladding having an axial lip (11) and a radial lip (11'), respectively in abutment on the internal free face of the disc (2) and on the surface (3).

6. An assembly according to Claims 3, 4 and 5, characterised by the fact that the limit of the elastomer cladding (10) connected to the mounting surface (7) has a circular rib (12) connected to the mounting surface (7) recessed in a countersink or on a bevel on the fixed support (6).

7. An assembly according to any one of Claims 1 to 6, characterised by the fact that the coder (4) has sufficient volume for the magnetic field which it generates to be easily read by a sensor.

8. An assembly according to any one of Claims 1 to 7, characterised by the fact that the annular cavity (19) contains a magnetic liquid.

9. An assembly according to Claims 2 and 8, characterised by the fact that the interstice (16) delimiting the peripheral surface of the assembly consisting of disc (2) and coder (4) contains a magnetic liquid.

10. An assembly according to any one of Claims 1 to 9, characterised by the fact that the disc (2) has a radial extension made of magnetic material for concentrating the magnetic flux delivered by the said coder (4).

11. An assembly according to any one of Claims 1 to 10, characterised by the fact that the magnetic particles present in the elastomer forming the coder (4) are made of ferrite.

12. A sealed bearing or roller bearing having a fixed raceway or support (6) and a rotating raceway or support (1) and, mounted on them, a preassembled assembly forming a sealing joint with incorporated coder, according to any one of Claims 1 to 11.
